# EUROPEAN PATENT SPECIFICATION

(11) **EP 4 280 069 B1**
(45) Date of publication and mention of the grant of the patent: **06.08.2025**
(21) Application number: 22899599.9
(22) Date of filing: 02.04.2022
(51) Int. Cl.: G06F 11/36, G05B 17/02, G06F 8/41, G05B 19/05, G06F 11/26

(54) **PLC TESTING SYSTEM AND METHOD**
PLC-TESTSYSTEM UND -VERFAHREN
SYSTÈME ET PROCÉDÉ DE TEST D'AUTOMATE PROGRAMMABLE (PLC)

(43) Date of publication of application: 22.11.2023
(73) Proprietor: Contemporary Amperex Technology (Hong Kong) Limited, Central, Central And Western District (HK)
(72) Inventor: WANG, Xuming, Ningde Fujian 352100 (CN); ZHANG, Dongfei, Ningde Fujian 352100 (CN); LIU, Chang, Ningde Fujian 352100 (CN)
(74) Representative: Ziebig Hengelhaupt Intellectual Property Attorneys Patentanwaltskanzlei PartGmbB
(86) International application number: PCT/CN2022/085161
(87) International publication number: WO 2023/184554

(56) References cited:
- EP-A1- 3 273 315
- EP-A1- 3 742 313
- CN-A- 102 495 580
- CN-A- 104 765 279
- CN-A- 105 426 302
- CN-A- 110 083 074
- US-A1- 2005 223 120
- US-A1- 2015 058 828
- ZHANG GUANGHONG, SUWEN SHI: "Development of Virtual Device based on PLC and Configuration Software", MODULAR MACHINE TOOL & AUTOMATIC MANUFACTURING TECHNIQUE, 20 September 2009 (2009-09-20), pages 29 - 32, XP093076645, ISSN: 1001-2265

## Description

### TECHNICAL FIELD

The present application belongs to the technical field of testing, and particularly relates to a PLC testing system and method.

### BACKGROUND ART

In the process of testing a PLC (Programmable Logic Controller) based on the real external environment, a unit tester or system joint debugging test or system comprehensive test is often used. Since signals and stimuli required in the test process are all derived from real external devices, the test environment is complex, the test efficiency is low, the test coverage is poor, and a fault injection manner lacks.

For this reason, the prior art provides a testing method, specifically as follows: S1, according to a test task of a PLC to be tested, selecting a PLC control instruction corresponding to the test task from a preset PLC test script library; S2, constructing a test case based on the PLC control instruction and a TCL (Tool Command Language) built-in instruction, and issuing the test case to a lower computer system; S3, generating, by the lower computer system, an excitation signal according to the test case, and sending the excitation signal to the PLC to be tested; and S4, testing the PLC to be tested based on the excitation signal.

The prior art constructs a PLC peripheral device equivalent based on a TCL script to replace the real peripheral environment of the PLC. Although the complexity of the real environment and the cumbersome test steps are simplified, a motion mechanism of an external device is also simplified, whereas the main function of the motion mechanism of the external device is to execute control commands of the PLC and feed back signals related to the control commands to the PLC through a sensor, and due to the simplification of the motion mechanism of the external device, the motion control of the PLC over the external device is not loop-locked, thus resulting in low test reliability. US20050223120A1 discloses a requirements database and test generator that generates tests for functional and field testing and generates requirements documentation, user manuals, operational procedures, instrument data sheets, instrument indices, instrument loop diagrams, validation reports, and test reports, including exception and passing reports.

### SUMMARY OF THE INVENTION

In view of this, the purpose of the present application is to provide a PLC testing system and method to alleviate the problem that motion control of an existing testing scheme over an external device is not loop-locked, resulting in low test reliability. The present invention is defined by the PLC testing system of independent claim 1 and the PLC testing method of independent claim 10.

Embodiments of the present application is implemented as follows:

In a first aspect, the present invention provides the PLC testing system according to claim 1. The testing tool is configured to start a preset test case to inject a fault into the virtual device; the PLC device is configured to execute a preset fault processing logic when receiving a fault signal produced by the virtual device simulating a field fault according to the injected fault, the preset fault processing logic including sending alarm information to the virtual device; and the testing tool is further configured to test whether the fault processing logic of the PLC device is normal by detecting whether the alarm information forwarded by the virtual device meets the expectation of injecting the fault by the preset test case.

In the embodiment of the present application, the virtual device is used to simulate the field real device, such that a corresponding fault signal can be produced by simulating the field fault and sent to the PLC device, and the PLC device executes the corresponding fault processing logic, so as to achieve the effect of closed-loop verification of the fault processing logic of the PLC, thereby improving the test reliability.

In combination with a possible implementation of the embodiment of the first aspect, the testing tool is further configured to send a switching-to-manual signal simulating a field manual intervention motion to the virtual device after detecting whether the alarm information forwarded by the virtual device meets the expectation of injecting the fault of the preset test case; and correspondingly, the PLC device is further configured to control the virtual device to switch to a manual mode when receiving the switching-to-manual signal forwarded by the virtual device.

In the embodiment of the present application, the virtual device is switched to the manual mode by simulating the field manual intervention action, so as to prevent the virtual device from continuing to run automatically and make mistakes. At the same time, manual intervention on the virtual device is convenient after the virtual device is switched to the manual mode.

In combination with a possible implementation of the embodiment of the first aspect, the testing tool is further configured to send a short reset signal simulating a field manual intervention motion to the virtual device after detecting whether the alarm information forwarded by the virtual device meets the expectation of injecting the fault by the preset test case; and correspondingly, the PLC device is further configured to reset and clear the preset fault processing logic and control the virtual device to clear the alarm information when receiving the short reset signal forwarded by the virtual device.

In the embodiment of the present application, the short reset signal is sent by simulating the field manual intervention motion to reset and clear the preset fault processing logic of the PLC device and the alarm information on the virtual device, so as to facilitate the subsequent realization of automatic continuous testing, thereby improving the testing efficiency.

In combination with a possible implementation of the embodiment of the first aspect, the testing tool is further configured to send a starting signal simulating a field manual intervention motion to the virtual device when detecting that the virtual device clears the alarm information; and correspondingly, the PLC device is further configured to control the virtual device to operate normally according to a preset automatic production flow when receiving the starting signal forwarded by the virtual device.

In the embodiment of the present application, the starting signal is sent by simulating the field manual intervention action when detecting that the virtual device clears the alarm information, so that the PLC device controls the virtual device to operate normally according to the preset automatic production flow, which provides a guarantee for the realization of automatic continuous testing and ensures the reliability of subsequent continuous testing.

In combination with a possible implementation of the embodiment of the first aspect, the testing tool is further configured to start a new preset test case to inject a new fault into the virtual device when detecting that the virtual device resumes normal operation, so as to continue to test whether remaining fault processing logics of the PLC device are normal.

In the embodiment of the present application, the new preset test case is started to inject the new fault into the virtual device when detecting that the virtual device resumes normal operation, so as to continue to test whether the remaining fault processing logics of the PLC device are normal, thereby efficiently realizing automatic continuous testing.

In combination with a possible implementation of the embodiment of the first aspect, the testing tool is further configured to send a switching-to-automatic signal simulating a field manual intervention motion to the virtual device after sending the switching-to-manual signal to the virtual device; and correspondingly, the PLC device is further configured to control the virtual device to switch to an automatic mode from the manual mode when receiving the switching-to-automatic signal forwarded by the virtual device.

In the embodiment of the present application, after the switching-to-manual signal is sent to the virtual device, the switching-to-automatic signal simulating the field manual intervention action is sent to the virtual device, so that the virtual device is switched from the manual mode to the automatic mode, so that the virtual device is controlled to operate normally automatically according to the production flow subsequently.

In combination with a possible implementation of the embodiment of the first aspect, the PLC testing system further includes a display module; and the display module is configured to display an operating state of the virtual device, and/or display the alarm information sent when the PLC device executes the preset fault processing logic.

In the embodiment of the present application, the display module displays the operating state of the virtual device, so that the operation of the virtual device is seen throughout the entire test process; and/or, the alarm information sent when the PLC device executes the preset fault processing logic is displayed. On the one hand, it is convenient for staff to understand the testing effect more intuitively and conveniently. On the other hand, through the displayed alarm information, the staff can subjectively judge whether the fault processing logic of the PLC device is normal.

In combination with a possible implementation of the embodiment of the first aspect, the virtual device and the testing tool are deployed on an industrial personal computer, and both the industrial personal computer and the PLC device include the display module.

In the embodiment of the present application, deploying the virtual device and the testing tool on the same industrial personal computer is more conducive to signal interaction between the testing tool and the virtual device. At the same time, by adopting the PLC device and the industrial personal computer containing the display module, the operating state of the virtual device and the alarm information sent when the PLC device executes the preset fault processing logic may be displayed at the same time.

In combination with a possible implementation of the embodiment of the first aspect, the virtual device and the testing tool are deployed on an industrial personal computer, and both the PLC device and the industrial personal computer are connected with the display module.

In the embodiment of the present application, deploying the virtual device and the testing tool on the same industrial personal computer is more conducive to signal interaction between the testing tool and the virtual device. At the same time, by adopting the manner that the PLC device and the industrial personal computer are both connected with the display module, even if the PLC device and the industrial personal computer do not contain a display screen, the operating state of the virtual device and the alarm information sent when the PLC device executes the preset fault processing logic may also be displayed at the same time.

In combination with a possible implementation of the embodiment of the first aspect, the virtual device and the testing tool are deployed on an industrial personal computer.

In the embodiment of the present invention, deploying the virtual device and the testing tool on the same industrial personal computer is more conducive to signal interaction between the testing tool and the virtual device.

In combination with a possible implementation of the embodiment of the first aspect, the virtual device and the testing tool are deployed on an industrial personal computer, and the industrial personal computer includes the PLC device.

In the embodiment of the present invention, deploying the virtual device and the testing tool on the same industrial personal computer is more conducive to signal interaction between the testing tool and the virtual device. At the same time, the virtual device and the testing tool are deployed on the industrial personal computer, and the PLC device is arranged as a part of the industrial personal computer, so that the fault processing logic of the PLC may be tested through one industrial personal computer, which greatly simplifies hardware resources required for completing testing.

In combination with a possible implementation of the embodiment of the first aspect, the preset test case is generated based on historical fault data and may be continuously updated.

In the embodiment of the present application, faults that actually occurred on the device in the past are converted into the test case and are continuously updated to improve the coverage of test faults.

In a second aspect, the present invention provides the PLC testing method according to claim 10.

In combination with a possible implementation of the embodiment of the second aspect, after detecting whether the alarm information forwarded by the virtual device meets the expectation of injecting the fault of the preset test case, the method further includes: sending, by the testing tool, a switching-to-manual signal simulating a field manual intervention motion to the virtual device; and controlling, by the PLC device, the virtual device to switch to a manual mode when receiving the switching-to-manual signal forwarded by the virtual device.

In combination with a possible implementation of the embodiment of the second aspect, after detecting whether the alarm information forwarded by the virtual device meets the expectation of injecting the fault of the preset test case, the method further includes: sending, by the testing tool, a short reset signal simulating a field manual intervention motion to the virtual device; and resetting and clearing, by the PLC device, the preset fault processing logic and controlling the virtual device to clear the alarm information when receiving the short reset signal forwarded by the virtual device.

In combination with a possible implementation of the embodiment of the second aspect, the method further includes: sending, by the testing tool, a starting signal simulating a field manual intervention motion to the virtual device when detecting that the virtual device clears the alarm information; and controlling, by the PLC device, the virtual device to operate normally according to a preset automatic production flow when receiving the starting signal forwarded by the virtual device.

In combination with a possible implementation of the embodiment of the second aspect, the method further includes: starting, by the testing tool, a new preset test case to inject a new fault into the virtual device when detecting that the virtual device resumes normal operation, so as to continue to test whether remaining fault processing logics of the PLC device are normal.

In combination with a possible implementation of the embodiment of the second aspect, after sending the switching-to-manual signal to the virtual device, the method further includes: sending, by the testing tool, a switching-to-automatic signal simulating a field manual intervention motion to the virtual device; and controlling, by the PLC device, the virtual device to switch to an automatic mode from the manual mode when receiving the switching-to-automatic signal forwarded by the virtual device.

The technical effects that can be achieved by the second aspect and various implementations of the second aspect refer to the corresponding technical effects in the first aspect, and the description will not be repeated here.

Other features and advantages of the present application will be described in the following description, and will become apparent in part from the description, or will be understood by implementing the embodiments of the present application. The objectives and other advantages of the present application can be realized and obtained by the structure specially pointed out in the written description and drawings.

### DESCRIPTION OF DRAWINGS

In order to explain technical solutions in embodiments of the present application or the prior art more clearly, the following will briefly introduce the drawings that need to be used in the embodiments. Apparently, the drawings in the following description are only some embodiments of the present application, and for those of ordinary skill in the art, on the premise of no creative labor, other drawings can be obtained from these drawings. The above and other objectives, features and advantages of the present application will be clearer through what is shown in the accompanying drawings. In all the accompanying drawings, identical reference numerals indicate identical parts. The drawings are not intentionally scaled and drawn according to the actual size, and the emphasis is on illustrating the gist of the present application.
Fig. 1 shows a schematic diagram of modules of a PLC testing system provided by an embodiment of the present application.
Fig. 2 shows a schematic diagram of a testing principle of a PLC testing system provided by an embodiment of the present application.
Fig. 3 shows a schematic structural diagram of a hardware involved in a PLC testing system provided by an embodiment of the present application.
Fig. 4 shows a schematic flow diagram of a PLC testing method provided by an embodiment of the present application.

### DETAILED DESCRIPTION

Technical solutions in embodiments of the present application will be described below with reference to the accompanying drawings in the embodiments of the present application.

It should be noted that: similar numerals and letters represent similar items in the following drawings. Therefore, once an item is defined in a drawing, it does not need to be further defined and explained in subsequent drawings. Meanwhile, in the description of the present application, relational terms such as "first" and "second" are only used to distinguish one entity or operation from another entity or operation, and do not necessarily require or imply any such actual relationship or order between these entities or operations. Moreover, the terms "include", "comprise" or any other variants thereof are intended to cover non-exclusive inclusion, so that a process, method, article or device including a series of elements not only includes those elements, but also includes other elements not clearly listed, or also includes elements inherent to this process, method, article or device. Without further restrictions, the elements defined by the sentence "including a..." do not exclude that there are other same elements in the process, method, article or device including the elements.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is only an association relationship for describing associated objects, indicating that there may be three relationships, for example A and/or B may represent three situations: A exists alone, both A and B exist, and B exists alone. In addition, the term "a plurality of" in the description of the embodiments of the present application refers to two or more (including two).

In view of current testing methods, a PLC (Programmable Logic Controller) peripheral device equivalent is constructed based on a TCL script to replace the real peripheral environment of a PLC. Although the complexity of the real environment and the cumbersome test steps are simplified, a motion mechanism of an external device is also simplified at the same time, consequently, the motion control of the PLC over the external device is not loop-locked, further resulting in the problem of low test reliability.

After the applicant's careful consideration, if the motion control of the PLC over the external device is loop-locked, then the test reliability can be improved. Therefore, in order to solve the above technical problems, the present application provides a brand-new PLC testing system and method. A field real device is simulated by adopting a virtual device (process simulate (PS) software running on an industrial personal computer), such that a corresponding fault signal can be produced and sent to a PLC device when a field fault is simulated, and the PLC device is enabled to execute a corresponding fault processing logic, so that the effect of testing fault processing logics of the PLC device in a loop-locked manner is achieved, thereby solving the problem of low reliability existing in the current testing methods.

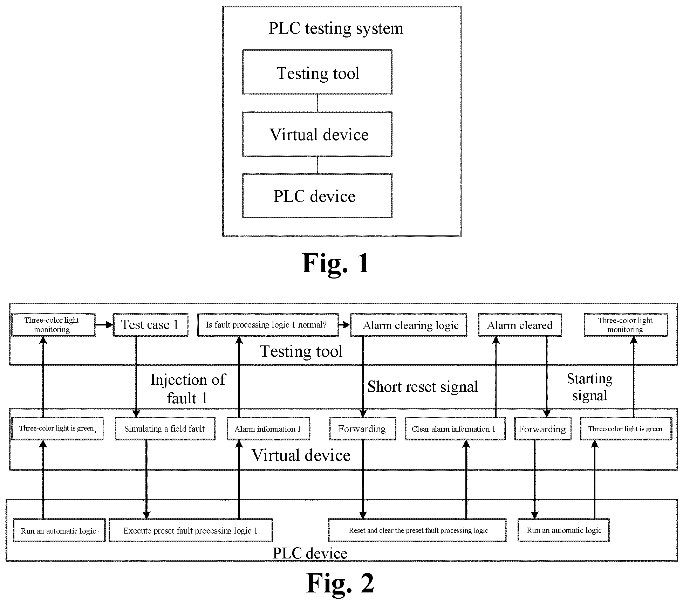

The technical solutions provided by the present application can be applied to any automatic control system or intelligent device controlled by a PLC, and have universal applicability. For a better understanding, the following will be explained in conjunction with a PLC testing system shown in Fig. 1. The PLC testing system includes: a virtual device (PS) simulating a field real device, a testing tool (such as an Ignition tool) and a PLC device.

The virtual device in the present application is a 3D digital model that simulates the field real device, and has the same function as the field real device. The virtual device includes a motion mechanism and a logic block, can execute related actions according to a PLC control signal and feed back an execution result to the PLC device, and can simulate a fault to produce a corresponding fault signal and send the fault signal to the PLC device when receiving injection of the fault.

For example, in a post-assembly stage of lithium batteries, production devices involved mainly include: a tab-adapter ultrasonic welding device, an adapter-top cover laser welding device, a Mylar wrapping device, a top cover-shell laser welding device, an airtight helium detection device, etc., these devices cooperate with each other under the control of a PLC device, and finally complete the assembly of the lithium batteries. Simulation software with the same functions as these real devices can be constructed by using a 3D modeling technology to simulate the operation of these real devices. It should be understood that field real devices under different application scenarios are different, and corresponding virtual devices are also different, so that executed logics are also different.

The tab-adapter ultrasonic welding device is configured to weld a tab and an adapter together. The adapter-top cover laser welding device is configured to weld an adapter and a top cover together. The Mylar wrapping device is used for lamination. The top cover-shell laser welding device is configured to weld a top cover and a shell together. The airtight helium detection device is configured to detect the airtightness of lithium batteries.

Due to the good programmability of the PLC device, the PLC device is widely applied in various automatic control systems, and is a digital operation electronic system specially designed for application in industrial environments. The PLC device will control various types of mechanical devices or production processes according to preset automatic production flows. The function and performance of the PLC device are related to the correctness and stability of automatic control. Therefore, it is necessary to test the function and performance of the PLC device, for example, it is necessary to test fault processing logics of the PLC device.

When testing the PLC device, the testing tool may be used to start a preset test case to inject a fault into the virtual device, so that the virtual device produces a fault signal by simulating a field fault according to the injected fault and sends the produced fault signal to the PLC device. The PLC device executes a preset fault processing logic when receiving the fault signal produced by the virtual device simulating the field fault according to the injected fault, the preset fault processing logic including sending alarm information to the virtual device. By using the testing tool to detect whether the alarm information forwarded by the virtual device meets the expectation of injecting the fault of the preset test case, whether the fault processing logic of the PLC device is normal is tested. If it is detected that the alarm information forwarded by the virtual device meets the expectation of injecting the fault of the preset test case, the corresponding fault processing logic of the PLC device is normal.

As the testing tool for testing the PLC device, such as the Ignition tool, the testing tool is mainly configured to start the preset test case to inject the fault into the virtual device, so that the virtual device produces a fault signal by simulating the field fault according to the injected fault and sends the produced fault signal to the PLC device. The testing tool is further configured to detect whether the alarm information forwarded by the virtual device meets the expectation of injecting the fault of the preset test case to test whether the fault processing logic of the PLC device is normal.

When the testing tool starts the preset test case to inject the fault into the virtual device, in one implementation, the testing tool judges whether a fault injection test starting condition is met, and when the fault injection test starting condition is met, the preset test case is started to inject the fault into the virtual device. When a test is about to start, the PLC device will be started first, and the PLC device controls the virtual device to operate normally according to a preset automatic production flow. At this time, a three-color light in the virtual device is green, which means that the virtual device is in a normal operation state. The testing tool monitors that the three-color light of the virtual device is green, judges that the fault injection test starting condition is met, and starts the preset test case, such as preset test case 1, to inject fault 1 into the virtual device.

The test case is used to inject the fault into the virtual device. Since an automatic control system controlled by the PLC device will execute various actions in the automatic production process, various faults may occur, and accordingly, various test cases will be involved. The preset test cases correspond to the injected faults one to one, and the injected faults of different preset test cases are different, so that the simulated field faults are also different. For example, test case 1 corresponds to fault 1, test case 2 corresponds to fault 2, test case 3 corresponds to fault 3, and so on.

In the embodiment of the present application, the preset test case is generated based on historical fault data, that is, the preset test case is generated based on actual faults of a device controlled by the PLC device. In order to improve the coverage of test faults, the preset test case may be continuously updated to cover all actual faults on devices in the past. In addition to faults considered in a design phase, field devices will also experience faults beyond the design considerations in an operation maintenance phase, and with continuous accumulation of a device life cycle, these continuously accumulated faults are converted into test cases for continuously improving the fault coverage.

The above-mentioned preset test case may be imported in the form of files, such as importing a file in an excel format to an industrial personal computer, and the testing tool running on the industrial personal computer may start the corresponding test case to inject the fault into the virtual device according to a user's configuration to test whether the fault processing logic of the PLC is normal.

Since the automatic control system controlled by the PLC device will execute various actions in the automatic production process, various faults may occur. Different faults may correspond to different fault processing logics of the PLC device. Therefore, it is necessary to test the different fault processing logics of the PLC device one by one.

In order to speed up the test efficiency, optionally, the testing tool is further configured to: after detecting whether the alarm information forwarded by the virtual device meets the expectation of injecting the fault of the preset test case, such as detecting that the alarm information forwarded by the virtual device meets the expectation of injecting the fault of the preset test case, the testing tool sends a short reset signal simulating a field manual intervention action to the virtual device, and the short reset signal is used to reset and clear a preset fault processing logic by the PLC device. Correspondingly, the PLC device is further configured to reset and clear the preset fault processing logic and control the virtual device to clear the alarm information when receiving the short reset signal forwarded by the virtual device.

Of course, it can be understood that even if it is detected that the alarm information forwarded by the virtual device does not meet the expectation of injecting the fault of the preset test case, the short reset signal simulating the field manual intervention action may also be sent to the virtual device. Therefore, the situation that "when detecting that the alarm information forwarded by the virtual device meets the expectation of injecting the fault of the preset test case, the testing tool sends the short reset signal simulating the field manual intervention action to the virtual device" in the above example cannot be understood as a limitation of the present application.

The testing tool is further configured to send a starting signal simulating a field manual intervention action to the virtual device when detecting that the virtual device clears the alarm information. Correspondingly, the PLC device is further configured to control the virtual device to operate normally according to the preset automatic production flow when receiving the starting signal forwarded by the virtual device.

The testing tool is further configured to start a new preset test case to inject a new fault to the virtual device when detecting that the virtual device resumes normal operation so as to continue to test whether remaining fault processing logics of the PLC are normal, for example, the testing tool starts preset test case 2 to inject fault 2 to the virtual device. The PLC device is configured to execute preset fault processing logic 2 when receiving fault signal 2 produced by the virtual device simulating a field fault according to injected fault 2, preset fault processing logic 2 including sending alarm information 2 to the virtual device. The testing tool is further configured to test whether fault processing logic 2 of the PLC device is normal by detecting whether alarm information 2 forwarded by the virtual device meets the expectation of injecting fault 2 of the preset test case.

In an optional implementation, after detecting whether the alarm information forwarded by the virtual device meets the expectation of injecting the fault of the preset test case, such as detecting that the alarm information forwarded by the virtual device meets the expectation of injecting the fault of the preset test case, the testing tool will further send a switching-to-manual signal simulating a field manual intervention motion to the virtual device. Correspondingly, the PLC device is further configured to control the virtual device to switch to a manual mode when receiving the switching-to-manual signal forwarded by the virtual device. It can be understood that even when the testing tool detects that the alarm information forwarded by the virtual device does not meet the expectation of injecting the fault of the preset test case, the testing tool may also send the switching-to-manual signal simulating the field manual intervention action to the virtual device.

The testing tool is further configured to send a switching-to-automatic signal simulating a field manual intervention motion to the virtual device after sending the switching-to-manual signal to the virtual device. Correspondingly, the PLC device is further configured to control the virtual device to switch to an automatic mode from the manual mode when receiving the switching-to-automatic signal forwarded by the virtual device.

Generally, operation modes of intelligent devices in the automatic control system include a manual mode and an automatic mode. In the manual mode, the virtual device stops automatic running, and a button on the device needs to be manually triggered before the device can execute corresponding operations. When the device is in the automatic mode, the device may automatically execute corresponding operations according to the control of the PLC device. By switching the virtual device to the manual mode, errors caused by the virtual device continuing to run automatically are avoided. In addition, in the automatic mode, manual intervention may not be possible. At this time, if manual intervention such as short reset is about to perform, the device needs to be switched to the manual mode, and then short reset is performed on the device, so that all alarm information can be cleared.

Therefore, in order to achieve automatic continuous testing, in an optional implementation, after detecting that the alarm information forwarded by the virtual device meets the expectation of injecting the fault of the preset test case, the testing tool may send the switching-to-manual signal simulating the field manual intervention motion to the virtual device, such that the PLC device controls the virtual device to switch to the manual mode when receiving the switching-to-manual signal forwarded by the virtual device. Afterwards, the testing tool sends the short reset signal simulating the field manual intervention motion to the virtual device, such that the PLC device resets and clears the preset fault processing logic and controls the virtual device to clear the alarm information when receiving the short reset signal forwarded by the virtual device. Afterwards, the testing tool sends the switching-to-automatic signal simulating the field manual intervention motion to the virtual device when detecting that the virtual device clears the alarm information, such that the PLC device controls the virtual device to switch to the automatic mode from the manual mode when receiving the switching-to-automatic signal forwarded by the virtual device. Afterwards, the testing tool sends the starting signal simulating the field manual intervention action to the virtual device, such that the virtual device is controlled to operate normally according to the preset automatic production flow when receiving the starting signal forwarded by the virtual device. Afterwards, the testing tool starts the new preset test case to inject the new fault into the virtual device when detecting that the virtual device resumes normal operation, so as to continue to test whether the remaining fault processing logics of the PLC device are normal.

For a better understanding, the testing principle of the PLC testing system shown in the embodiment of the present application will be described below in conjunction with the schematic diagram shown in Fig. 2.

At the beginning, the PLC device operates an automatic logic, and the virtual device is controlled to operate normally according to the preset automatic production flow. At this time, the three-color light in the virtual device is green, which means that the virtual device is in the normal operation state. The testing tool judges whether the fault injection test starting condition is met by monitoring the color of the three-color light of the virtual device. If it is monitored that the three-color light of the virtual device is green, it is determined that the fault injection test starting condition is met.

The testing tool determines that the fault injection test starting condition is met, and starts the preset test case, such as preset test case 1, to inject fault 1 into the virtual device; and the virtual device produces a fault signal by simulating a field fault according to the injected fault and sends the produced fault signal to the PLC device. The PLC device executes preset fault processing logic 1 after receiving the fault signal fed back by the virtual device, including sending alarm information 1 to the virtual device and controlling the three-color light of the virtual device to be changed to red. The virtual device sends alarm information 1 to the testing tool. The testing tool monitors alarm information 1, and detects whether alarm information 1 forwarded by the virtual device meets the expectation of injecting fault 1 of preset test case 1 to test whether fault processing logic 1 of the PLC device is normal.

In order to achieve automatic continuous testing, the testing tool executes a delayed alarm clearing logic after detecting whether alarm information 1 forwarded by the virtual device meets the expectation of injecting fault 1 of preset test case 1, such as sending the switching-to-manual signal and the short reset signal simulating the field manual intervention action to the virtual device. The virtual device sends the switching-to-manual signal and the short reset signal to the PLC device. The PLC device controls the virtual device to switch to the manual mode when receiving the switching-to-manual signal, and controls resetting and clearing of preset fault processing logic 1 and controls the virtual device to clear alarm information 1 when receiving the short reset signal, and at this time, the three-color light of the virtual device is yellow.

The testing tool sends the switching-to-automatic signal and the starting signal simulating the field manual intervention action to the virtual device when detecting that the virtual device clears alarm information 1. The virtual device sends the switching-to-automatic signal and the starting signal to the PLC device. The PLC device controls the virtual device to switch to the automatic mode when receiving the switching-to-automatic signal, and operates the automatic logic to control the virtual device to operate normally according to the preset automatic production flow when receiving the starting signal, and at this time, the three-color light of the virtual device resumes to green. The testing tool monitors that the three-color light of the virtual device is green, determines that preset test case 1 passes, and is ready to start the next preset test case, such as preset test case 2, to inject new fault 2 into the virtual device to continue to test whether the remaining fault processing logics of the PLC device are normal.

In an implementation, the virtual device and the testing tool may be both deployed on the same industrial personal computer to facilitate signal interaction between the testing tool and the virtual device.

In an implementation, the PLC testing system may only include an industrial personal computer. At this time, the virtual device and the testing tool are deployed on the industrial personal computer. The industrial personal computer includes the PLC device. In this implementation, the PLC device is a part of the industrial personal computer.

In an implementation, the PLC testing system may only include an industrial personal computer and the PLC device. At this time, the PLC device and the industrial personal computer are electrically connected and are devices that are independent of each other. The virtual device and the testing tool are deployed on the industrial personal computer. At this time, neither the industrial personal computer nor the PLC device may include a display module.

In order to make the whole test process intuitively visible, the PLC testing system further includes a display module. The display module is configured to display an operating state of the virtual device, so that the operation of the virtual device is seen throughout the entire test process; and/or, the alarm information sent when the PLC device executes the preset fault processing logic is displayed, and according to the displayed alarm information, whether the fault processing logic of the PLC device is normal may be subjectively judged.

In an optional implementation, both the industrial personal computer and the PLC device include a display module. At this time, the PLC testing system includes the industrial personal computer and the PLC device, and the PLC device and the industrial personal computer are electrically connected. The display module on the industrial personal computer is configured to display the operating state of the virtual device and a test interface of the testing tool. The display module on the PLC device may be configured to display the alarm information sent when the PLC executes the preset fault processing logic.

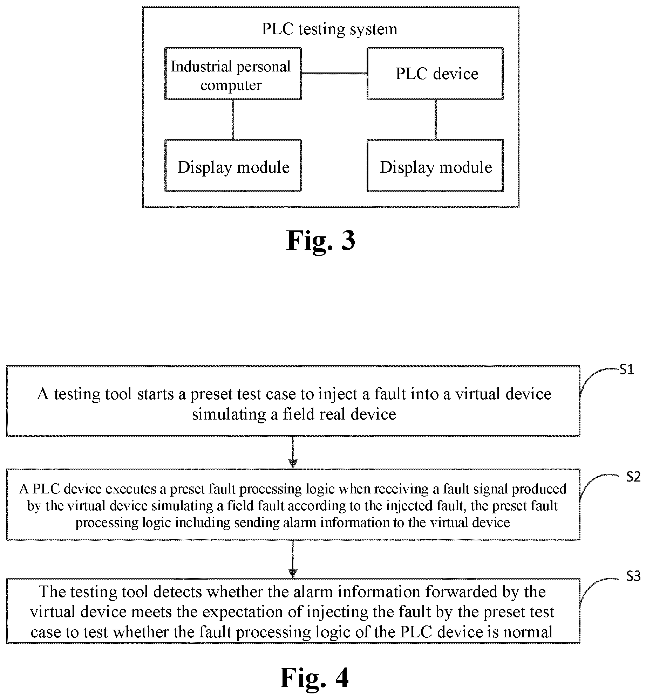

In an optional implementation, the PLC testing system may include an industrial personal computer, the PLC device and a display module. The industrial personal computer, the PLC device and the display module are electrically connected and are devices that are independent of each other. In this implementation, the number of display modules may be 2, for example, the industrial personal computer is electrically connected to one of the display modules, and the PLC device is electrically connected to the other display module. At this time, a hardware connection schematic diagram of the PLC testing system is as shown in Fig. 3.

When the PLC device includes the display module or the PLC testing system further includes the display modules electrically connected to the PLC device, the preset fault processing logic further includes controlling the display module to display the alarm information sent when the PLC device executes the preset fault processing logic.

Based on the same inventive concept, an embodiment of the present application further provides a PLC testing method, and the principle and produced technical effects of the PLC testing method are the same as the implementation principle and produced technical effects of the aforementioned PLC testing system. The PLC testing method provided by the embodiment of the present application will be described below in combination with Fig. 4.

S1: a testing tool starts a preset test case to inject a fault into a virtual device simulating a field real device.

In an optional implementation, the testing tool may start the preset test case, such as preset test case 1, when determining that a fault injection test starting condition is met, for example, the testing tool monitors that a three-color light of the virtual device is green, to inject fault 1 into the virtual device.

S2: a PLC device executes a preset fault processing logic when receiving a fault signal produced by the virtual device simulating a field fault according to the injected fault, the preset fault processing logic including sending alarm information to the virtual device.

S3: the testing tool detects whether the alarm information forwarded by the virtual device meets the expectation of injecting the fault of the preset test case to test whether the fault processing logic of the PLC device is normal.

Optionally, after detecting whether the alarm information forwarded by the virtual device meets the expectation of injecting the fault of the preset test case, the method further includes: sending, by the testing tool, a switching-to-manual signal simulating a field manual intervention motion to the virtual device; and controlling, by the PLC device, the virtual device to switch to a manual mode when receiving the switching-to-manual signal forwarded by the virtual device.

After sending the switching-to-manual signal to the virtual device, the method further includes: sending, by the testing tool, a switching-to-automatic signal simulating a field manual intervention motion to the virtual device; and controlling, by the PLC device, the virtual device to switch to an automatic mode from the manual mode when receiving the switching-to-automatic signal forwarded by the virtual device.

Optionally, after detecting whether the alarm information forwarded by the virtual device meets the expectation of injecting the fault of the preset test case, the method further includes: sending, by the testing tool, a short reset signal simulating a field manual intervention motion to the virtual device; and resetting and clearing, by the PLC device, the preset fault processing logic and controlling the virtual device to clear the alarm information when receiving the short reset signal forwarded by the virtual device.

The method further includes: sending, by the testing tool, a starting signal simulating a field manual intervention motion to the virtual device when detecting that the virtual device clears the alarm information; and controlling, by the PLC device, the virtual device to operate normally according to a preset automatic production flow when receiving the starting signal forwarded by the virtual device.

The method further includes: starting, by the testing tool, a new preset test case to inject a new fault into the virtual device when detecting that the virtual device resumes normal operation, so as to continue to test whether remaining fault processing logics of the PLC device are normal.

For example, in an optional implementation, after detecting whether the alarm information forwarded by the virtual device meets the expectation of injecting the fault of the preset test case, the method further includes:
sending, by the testing tool, the switching-to-manual signal simulating the field manual intervention action to the virtual device; controlling, by the PLC device, the virtual device to switch to the manual mode when receiving the switching-to-manual signal forwarded by the virtual device; afterwards, sending, by the testing tool, the short reset signal simulating the field manual intervention motion to the virtual device; resetting and clearing, by the PLC device, the preset fault processing logic and controlling the virtual device to clear the alarm information when receiving the short reset signal forwarded by the virtual device; afterwards, sending, by the testing tool, the switching-to-automatic signal simulating the field manual intervention action to the virtual device when detecting that the virtual device clears the alarm information; controlling, by the PLC device, the virtual device to switch to the automatic mode from the manual mode when receiving the switching-to-automatic signal forwarded by the virtual device; afterwards, sending, by the testing tool, the starting signal simulating the field manual intervention motion to the virtual device; controlling the virtual device to operate normally according to the preset automatic production flow when receiving the starting signal forwarded by the virtual device; and afterwards, starting, by the testing tool, the new preset test case to inject the new fault into the virtual device when detecting that the virtual device resumes normal operation, so as to continue to test whether the remaining fault processing logics of the PLC device are normal.

The PLC testing method provided by the embodiment of the present application has the same implementation principle and produced technical effects as the aforementioned PLC testing system embodiment. For a brief description, the part of the method embodiment that is not mentioned can refer to the corresponding content in the aforementioned PLC testing system embodiment.

It should be noted that, the various embodiments in the description are described in a progressive manner, each embodiment focuses on the differences from other embodiments, and the same and similar parts of the various embodiments can be referred to each other.

In the several embodiments provided in the present application, it should be understood that the disclosed method may be implemented in other manners. The embodiments described above are only schematic, for example, the flow charts and block diagrams in the drawings illustrate the architectures, functions, and operations of possible implementations of the methods and computer program products according to various embodiments of the present application. In this regard, each block in the flow charts or block diagrams may represent a module, a program segment, or part of a code, and the module, program segment, or part of the code includes one or more executable instructions for implementing specified logical functions. It should also be noted that, in some alternative implementations, functions marked in the blocks may also occur in an order different from that marked in the accompanying drawings. For example, two successive blocks may actually be executed in parallel substantially, and sometimes they may also be executed in an inverse order, which depends on involved functions. It should be further noted that each block in the block diagrams and/or flow charts as well as a combination of blocks in the block diagrams and/or flow charts may be implemented using a dedicated hardware-based system that executes specified functions or actions, or using a combination of special hardware and computer instructions.

The above is only the detailed description of the present application, but the scope of protection of the present application is not limited to this. Changes or replacements that can be easily obtained by any person skilled in the art within the technical scope disclosed in the present application should be covered in the scope of protection of the present application. Therefore, the scope of protection of the present application shall be subject to the scope of protection of the claims.

## Claims

1. A PLC testing system, comprising:
an industrial personal computer on which a virtual device and a testing tool are deployed; and
a PLC device;
the virtual device simulating a field real device;
the testing tool configured to start a preset test case to inject a fault into the virtual device; and
the PLC device configured to execute a preset fault processing logic when receiving a fault signal produced by the virtual device simulating a field fault according to the injected fault, the preset fault processing logic comprising sending alarm information to the virtual device; wherein
the virtual device is configured to forward the alarm information to the testing tool;
the testing tool is further configured to detect whether the alarm information meets the expectation of injecting the fault by the preset test case to test whether the fault processing logic of the PLC device is normal; **characterized in that**:
the testing tool is further configured to send a switching-to-manual signal simulating a field manual intervention action to the virtual device after detecting whether the alarm information meets the expectation of injecting the fault of the preset test case;
the virtual device is configured to forward the switching-to-manual signal to the PLC device;
and correspondingly,
the PLC device is further configured to control the virtual device to switch to a manual mode when receiving the switching-to-manual signal;
wherein the testing tool is further configured to send a reset signal simulating a field manual intervention action to the virtual device after the PLC device controls the virtual device to switch to a manual mode;
the virtual device is configured to forward the reset signal to PLC device;
and correspondingly,
the PLC device is further configured to reset and clear the preset fault processing logic and control the virtual device to clear the alarm information when receiving the reset signal.

2. The PLC testing system according to claim 1, wherein the testing tool is further configured to send a switching-to-automatic signal simulating the field manual intervention motion to the virtual device when detecting that the virtual device clears the alarm information; and
the PLC device is further configured to control the virtual device to switch to an automatic mode from the manual mode when receiving the switching-to-automatic signal forwarded by the virtual device.

3. The PLC testing system according to claim 2, wherein the testing tool is further configured to send a starting signal simulating the field manual intervention action to the virtual device after the PLC device controls the virtual device to switch to the automatic mode from the manual mode; and
the virtual device is further configured to be controlled to operate normally according to a preset automatic production flow when receiving the starting signal forwarded by the virtual device.

4. The PLC testing system according to claim 3, wherein the testing tool is further configured to start a new preset test case to inject a new fault into the virtual device when detecting that the virtual device resumes normal operation, so as to continue to test whether remaining fault processing logics of the PLC device are normal.

5. The PLC testing system according to any one of claims 1 to 4, wherein the PLC testing system further comprises a display module; and
the display module is configured to display an operating state of the virtual device, and/or display the alarm information sent when the PLC device executes the preset fault processing logic.

6. The PLC testing system according to claim 5, wherein both the industrial personal computer and the PLC device comprise a display module.

7. The PLC testing system according to claim 5, wherein both the PLC device and the industrial personal computer are connected with the display module.

8. The PLC testing system according to claim 7, wherein the virtual device and the testing tool are deployed on the industrial personal computer, and the industrial personal computer comprises the PLC device.

9. The PLC testing system according to any one of claims 1 to 6, wherein the preset test case is generated based on historical fault data and is able to be continuously updated.

10. A PLC testing method, comprising:
starting (S1), by a testing tool, a preset test case to inject a fault into a virtual device simulating a field real device; and
executing (S2), by a PLC device, a preset fault processing logic when receiving a fault signal produced by the virtual device simulating a field fault according to the injected fault, the preset fault processing logic comprising sending alarm information to the virtual device; wherein
the testing tool detects whether the alarm information forwarded by the virtual device meets the expectation of injecting the fault by the preset test case to test whether the fault processing logic of the PLC device is normal (S3); **characterized in that**:
the method further comprises:
sending, by the testing tool, a switching-to-manual signal simulating a field manual intervention action to the virtual device after detecting whether the alarm information forwarded by the virtual device meets the expectation of injecting the fault of the preset test case;
controlling, by the PLC device, the virtual device to switch to a manual mode when receiving the switching-to-manual signal forwarded by the virtual device;
sending, by the testing tool, a reset signal simulating a field manual intervention action to the virtual device after the PLC device controls the virtual device to switch to a manual mode;
resetting and clearing, by the PLC device, the preset fault processing logic and controlling the virtual device to clear the alarm information when receiving the reset signal forwarded by the virtual device.

## Patentansprüche

1. PLC-Testsystem, aufweisend:
einen industriellen Personal Computer, auf dem eine virtuelle Einrichtung und ein Testwerkzeug installiert sind; und
eine PLC-Einrichtung;
wobei die virtuelle Einrichtung eine reale Einrichtung im Feld simuliert;
das Testwerkzeug dazu eingerichtet ist, einen vorbestimmten Testfall zu starten, um einen Fehler in die virtuelle Einrichtung zu injizieren; und
die PLC-Einrichtung dazu eingerichtet ist, beim Empfangen eines Fehlersignals, das von der virtuellen Einrichtung erzeugt wird, die einen Feldfehler simuliert, entsprechend dem injizierten Fehler eine vorbestimmte Fehlerverarbeitungslogik auszuführen, und die vorbestimmte Fehlerverarbeitungslogik Senden von Alarminformationen an die virtuelle Einrichtung umfasst; wobei
die virtuelle Einrichtung dazu eingerichtet ist, die Alarminformationen an das Testwerkzeug weiterzuleiten;
das Testwerkzeug ferner dazu eingerichtet ist, zu erkennen, ob die Alarminformationen die Erwartung des Injizierens des Fehlers durch den vorbestimmten Testfall erfüllen, um zu testen, ob die Fehlerverarbeitungslogik der PLC-Einrichtung normal ist; **dadurch gekennzeichnet dass**:
das Testwerkzeug ferner dazu eingerichtet ist, nach dem Erkennen, ob die Alarminformationen die Erwartung des Injizierens des Fehlers des vorbestimmten Testfalls erfüllen, ein Auf-manuell-umschalten-Signal, das eine manuelle Eingriffsaktion im Feld simuliert, an die virtuelle Einrichtung zu senden;
die virtuelle Einrichtung dazu eingerichtet ist, das Auf-manuell-umschalten-Signal an die PLC-Einrichtung weiterzuleiten; und
die PLC-Einrichtung entsprechend ferner dazu eingerichtet ist, beim Empfangen des Auf-manuell-umschalten-Signals die virtuelle Einrichtung dazu zu steuern, auf einen manuellen Modus umzuschalten;
wobei das Testwerkzeug ferner dazu eingerichtet ist, ein Rücksetzsignal, das eine manuelle Eingriffsaktion im Feld simuliert, an die virtuelle Einrichtung zu senden, nachdem die PLC-Einrichtung die virtuelle Einrichtung dazu gesteuert hat, auf einen manuellen Modus umzuschalten;
die virtuelle Einrichtung dazu eingerichtet ist, das Rücksetzsignal an die PLC-Einrichtung weiterzuleiten; und
die PLC-Einrichtung entsprechend ferner dazu eingerichtet ist, beim Empfangen des Rücksetzsignals die vorbestimmte Fehlerverarbeitungslogik zurückzusetzen und zu löschen und die virtuelle Einrichtung dazu zu steuern, die Alarminformationen zu löschen.

2. PLC-Testsystem nach Anspruch 1, wobei das Testwerkzeug ferner dazu eingerichtet ist, beim Erkennen, dass die virtuelle Einrichtung die Alarminformationen löscht, ein Auf-Automatik-umschalten-Signal, das die manuelle Eingriffsbewegung im Feld simuliert, an die virtuelle Einrichtung zu senden; und
die PLC-Einrichtung ferner dazu eingerichtet ist, beim Empfangen des von der virtuellen Einrichtung weitergeleiteten Auf-Automatik-umschalten-Signals die virtuelle Einrichtung dazu zu steuern, von dem manuellen Modus in den automatischen Modus umzuschalten.

3. PLC-Testsystem nach Anspruch 2, wobei das Testwerkzeug ferner dazu eingerichtet ist, ein Startsignal, das die manuelle Eingriffsaktion im Feld simuliert, an die virtuelle Einrichtung zu senden, nachdem die PLC-Einrichtung die virtuelle Einrichtung dazu gesteuert hat, von dem manuellen Modus in den automatischen Modus umzuschalten; und
die virtuelle Einrichtung ferner dazu eingerichtet ist, beim Empfangen des durch die virtuelle Einrichtung weitergeleiteten Startsignals dazu gesteuert zu werden, normal gemäß einem vorbestimmten automatischen Produktionsfluss in Betrieb zu sein.

4. PLC-Testsystem nach Anspruch 3, wobei das Testwerkzeug ferner dazu eingerichtet ist, beim Erkennen, dass die virtuelle Einrichtung einen normalen Betrieb wiederaufnimmt, einen neuen vorbestimmten Testfall zu starten, um einen neuen Fehler in die virtuelle Einrichtung zu injizieren, um fortgesetzt zu testen, ob verbleibende Fehlerverarbeitungslogiken der PLC-Einrichtung normal sind.

5. PLC-Testsystem nach einem der Ansprüche 1 bis 4, wobei das PLC-Testsystem ferner ein Anzeigemodul aufweist; und
das Anzeigemodul dazu eingerichtet ist, einen Betriebszustand der virtuellen Einrichtung anzuzeigen und/oder die Alarminformationen anzuzeigen, die gesendet werden, wenn die PLC-Einrichtung die vorbestimmte Fehlerverarbeitungslogik ausführt.

6. PLC-Testsystem nach Anspruch 5, wobei sowohl der industrielle Personal Computer als auch die PLC-Einrichtung ein Anzeigemodul aufweist.

7. PLC-Testsystem nach Anspruch 5, wobei sowohl die PLC-Einrichtung als auch der industrielle Personal Computer mit dem Anzeigemodul verbunden sind.

8. PLC-Testsystem nach Anspruch 7, wobei die virtuelle Einrichtung und das Testwerkzeug auf dem industriellen Personal Computer installiert sind und der industrielle Personal Computer die PLC-Einrichtung aufweist.

9. PLC-Testsystem nach einem der Ansprüche 1 bis 6, wobei der vorbestimmte Testfall auf Grundlage von historischen Fehlerdaten generiert wird und kontinuierlich aktualisierbar ist.

10. PLC-Testverfahren, umfassend:
Starten (S1), durch ein Testwerkzeug, eines vorbestimmten Testfalls, um einen Fehler in eine virtuelle Einrichtung zu injizieren, die eine reale Einrichtung im Feld simuliert; und
Ausführen (S2), durch eine PLC-Einrichtung, einer vorbestimmten Fehlerverarbeitungslogik entsprechend dem injizierten Fehler beim Empfangen eines Fehlersignals, das von der virtuellen Einrichtung erzeugt wird, die einen Feldfehler simuliert, wobei die vorbestimmte Fehlerverarbeitungslogik Senden von Alarminformationen an die virtuelle Einrichtung umfasst; wobei
das Testwerkzeug erkennt, ob die von der virtuellen Einrichtung weitergeleiteten Alarminformationen die Erwartung des Injizierens des Fehlers durch den vorbestimmten Testfall erfüllen, um zu testen, ob die Fehlerverarbeitungslogik der PLC-Einrichtung normal ist (S3); **dadurch gekennzeichnet dass** das Verfahren ferner umfasst:
Senden, durch das Testwerkzeug, eines Auf-manuell-umschalten-Signals, das eine manuelle Eingriffsaktion im Feld simuliert, an die virtuelle Einrichtung nach dem Erkennen, ob die von der virtuellen Einrichtung weitergeleiteten Alarminformationen die Erwartung des Injizierens des Fehlers des vorbestimmten Testfalls erfüllen;
Steuern, durch die PLC-Einrichtung, der virtuellen Einrichtung dazu, auf einen manuellen Modus umzuschalten, beim Empfangen des von der virtuellen Einrichtung weitergeleiteten Auf-manuell-umschalten-Signals;
Senden, durch das Testwerkzeug, eines Rücksetzsignals, das eine manuelle Eingriffsaktion im Feld simuliert, an die virtuelle Einrichtung, nachdem die PLC-Einrichtung die virtuelle Einrichtung dazu gesteuert hat, auf einen manuellen Modus umzuschalten;
Zurücksetzen und Löschen, durch die PLC-Einrichtung, der vorbestimmten Fehlerverarbeitungslogik und Steuern der virtuellen Einrichtung dazu, die Alarminformationen zu löschen, beim Empfangen des von der virtuellen Einrichtung weitergeleiteten Rücksetzsignals.

## Revendications

1. Un système de test PLC, comprenant:
un ordinateur personnel industriel sur lequel un dispositif virtuel et un outil de test sont déployés; et un dispositif PLC;
le dispositif virtuel simulant un dispositif réel sur le terrain;
l'outil de test configuré pour démarrer un cas de test prédéfini afin d'injecter un défaut dans le dispositif virtuel; et
le dispositif PLC configuré pour exécuter une logique de traitement de défaut prédéfinie lors de la réception d'un signal de défaut produit par le dispositif virtuel simulant un défaut sur le terrain en fonction du défaut injecté, la logique de traitement de défaut prédéfinie comprenant l'envoi d'informations d'alarme au dispositif virtuel; dans lequel
le dispositif virtuel est configuré pour transmettre les informations d'alarme à l'outil de test;
l'outil de test est en outre configuré pour détecter si les informations d'alarme répondent à l'attente d'injection du défaut par le cas de test prédéfini pour tester si la logique de traitement de défaut du dispositif PLC est normale; **caractérisé en ce que**:
l'outil de test est en outre configuré pour envoyer un signal de passage en mode manuel simulant une action d'intervention manuelle sur le terrain au dispositif virtuel après avoir détecté si les informations d'alarme répondent à l'attente d'injection du défaut du cas de test prédéfini;
le dispositif virtuel est configuré pour transmettre le signal de passage en mode manuel au dispositif PLC; et en conséquence,
le dispositif PLC est en outre configuré pour commander le dispositif virtuel afin qu'il passe en mode manuel lors de la réception du signal de passage en mode manuel;
dans lequel l'outil de test est en outre configuré pour envoyer un signal de réinitialisation simulant une action d'intervention manuelle sur le terrain au dispositif virtuel après la commande du dispositif PLC au dispositif virtuel pour passer en mode manuel;
le dispositif virtuel est configuré pour transmettre le signal de réinitialisation au dispositif PLC; et en conséquence,
le dispositif PLC est en outre configuré pour réinitialiser et effacer la logique de traitement de défaut prédéfinie et commander le dispositif virtuel pour effacer les informations d'alarme lors de la réception du signal de réinitialisation.

2. Système de test PLC selon la revendication 1, dans lequel l'outil de test est en outre configuré pour envoyer un signal de passage en mode automatique simulant le mouvement d'intervention manuelle sur le terrain au dispositif virtuel lorsqu'il détecte que le dispositif virtuel efface les informations d'alarme; et
le dispositif PLC est en outre configuré pour commander le dispositif virtuel afin qu'il passe du mode manuel à un mode automatique lors de la réception du signal de passage en mode automatique transmis par le dispositif virtuel.

3. Système de test PLC selon la revendication 2, dans lequel l'outil de test est en outre configuré pour envoyer un signal de démarrage simulant l'action d'intervention manuelle sur le terrain au dispositif virtuel après la commande du dispositif PLC au dispositif virtuel pour passer du mode manuel en mode automatique; et
le dispositif virtuel est en outre configuré pour être commandé de manière à fonctionner normalement selon un flux de production automatique prédéfini lors de la réception du signal de démarrage transmis par le dispositif virtuel.

4. Système de test PLC selon la revendication 3, dans lequel l'outil de test est en outre configuré pour démarrer un nouveau cas de test prédéfini afin d'injecter un nouveau défaut dans le dispositif virtuel lorsqu'il détecte que le dispositif virtuel reprend son fonctionnement normal, de manière à continuer à tester si les logiques de traitement de défaut restantes du dispositif PLC sont normales.

5. Système de test PLC selon l'une quelconque des revendications 1 à 4, dans lequel le système de test PLC comprend en outre un module d'affichage; et
le module d'affichage est configuré pour afficher un état de fonctionnement du dispositif virtuel, et/ou afficher les informations d'alarme envoyées lorsque le dispositif PLC exécute la logique de traitement de défaut prédéfinie.

6. Système de test PLC selon la revendication 5, dans lequel l'ordinateur personnel industriel et le dispositif PLC comprennent tous deux un module d'affichage.

7. Système de test PLC selon la revendication 5, dans lequel le dispositif PLC et l'ordinateur personnel industriel sont tous deux connectés au module d'affichage.

8. Système de test PLC selon la revendication 7, dans lequel le dispositif virtuel et l'outil de test sont déployés sur l'ordinateur personnel industriel, et l'ordinateur personnel industriel comprend le dispositif PLC.

9. Système de test PLC selon l'une quelconque des revendications 1 à 6, dans lequel le cas de test prédéfini est généré sur la base de données de défaut historiques et peut être mis à jour en permanence.

10. Un procédé de test PLC, comprenant:
le démarrage (S1), par un outil de test, d'un cas de test prédéfini pour injecter un défaut dans un dispositif virtuel simulant un dispositif réel sur le terrain; et
l'exécution (S2), par un dispositif PLC, d'une logique de traitement de défaut prédéfinie lors de la réception d'un signal de défaut produit par le dispositif virtuel simulant un défaut sur le terrain en fonction du défaut injecté, la logique de traitement de défaut prédéfinie comprenant l'envoi d'informations d'alarme au dispositif virtuel; dans lequel
l'outil de test détecte si les informations d'alarme transmises par le dispositif virtuel répondent à l'attente d'injection du défaut par le cas de test prédéfini pour tester si la logique de traitement de défaut du dispositif PLC est normale (S3); **caractérisé en ce que**:
le procédé comprend en outre:
l'envoi, par l'outil de test, d'un signal de passage en mode manuel simulant une action d'intervention manuelle sur le terrain au dispositif virtuel après avoir détecté si les informations d'alarme transmises par le dispositif virtuel répondent à l'attente d'injection du défaut du cas de test prédéfini;
la commande, par le dispositif PLC, au dispositif virtuel pour passer en mode manuel lors de la réception le signal de passage en mode manuel transmis par le dispositif virtuel;
l'envoi, par l'outil de test, d'un signal de réinitialisation simulant une action d'intervention manuelle sur le terrain au dispositif virtuel après la commande du dispositif PLC au dispositif virtuel pour passer en mode manuel;
la réinitialisation et l'effacement, par le dispositif PLC, de la logique de traitement de défaut prédéfinie et la commande au dispositif virtuel pour effacer les informations d'alarme lors de la réception du signal de réinitialisation transmis par le dispositif virtuel.
